# DEMANDE DE BREVET EUROPEEN

(11) **EP 4 629 369 A1**
(43) Date de publication de la demande: **08.10.2025**
(21) Numéro de dépôt: 24305515.9
(22) Date de dépôt: 03.04.2024
(51) Int. Cl.: H01M 10/04, H01M 50/244

(54) **PROCÉDÉ D'ASSEMBLAGE D'UN MODULE POUR BATTERIE ÉLECTRIQUE METTANT EN OEUVRE UN DISPOSITIF DE MANUTENTION COMPRENANT DES MÂCHOIRES ET UNE PARTIE ALLONGÉE S ÉTENDANT D'UN CÔTÉ D'UNE ZONE DE RÉCEPTION**

(71) Demandeur: Automotive Cells Company SE, 33520 Bruges (FR)
(72) Inventeur: FRESNEAU, Aymeric, 33400 TALENCE (FR); MARATHE, Dimitri, 33310 LORMONT (FR); FAT-CHEUNG, Adrien, 33520 BRUGES (FR); CHAUVEAU, Pierre, 33520 BRUGES (FR)
(74) Mandataire: Lavoix

(57) **Abrégé**

Procédé d'assemblage d'un module pour batterie électrique comprenant les étapes :
- obtention d'un ensemble comprenant successivement une première plaque de maintien, une pluralité de cellules électrochimiques, et une deuxième plaque de maintien,
- obtention d'un élément de boîtier formant une gaine,
- obtention d'un dispositif de manutention comprenant un corps, et deux mâchoires mobiles l'une par rapport à l'autre selon un axe de compression, l'une des deux mâchoires et une portion du corps formant une partie allongée du dispositif de manutention s'étendant selon l'axe de compression d'un côté d'une zone de réception,
- déplacement de l'élément de boîtier pour mettre l'élément de boîtier dans la zone de réception, puis vers une position intermédiaire, dans laquelle l'élément de boîtier entoure la partie allongée,
- déplacement de l'ensemble pour mettre l'ensemble dans la zone de réception, et déplacement des deux mâchoires pour appliquer des efforts de compression sur la première plaque de maintien et sur la deuxième plaque de maintien, l'ensemble étant dans une configuration contractée,
- installation de connecteurs électriques entre au moins certaines des cellules,
- déplacement de l'élément de boîtier depuis la position intermédiaire vers une position enfilée, dans laquelle la gaine entoure l'ensemble,
- fixation de la première plaque de maintien et de la deuxième plaque de maintien respectivement sur l'élément de boîtier,
- déplacement des deux mâchoires pour libérer l'ensemble et l'élément de boîtier.

## Description

La présente invention concerne un procédé d'assemblage d'un module pour batterie électrique.

L'invention s'applique en particulier à la réalisation d'un module pour batterie de véhicule électrique ou hybride.

Une batterie comprend une pluralité de cellules électrochimiques reliées électriquement les unes aux autres.

Chaque cellule est constituée d'un empilement d'éléments électrochimiques connu sous le terme anglais de « stack ». L'empilement comprend notamment des électrodes positives et des électrodes négatives formant des feuillets séparés par une couche de séparation.

Selon un exemple particulier, les cellules sont regroupées pour former un ou plusieurs ensembles, chacun comportant des cellules alignées les unes par rapport aux autres dans une direction. Afin de retenir les cellules dans chacun des ensembles, et de résister aux efforts dus au gonflement des cellules lors de l'utilisation de la batterie (en anglais « swelling »), il est connu de ceindre chacun des ensembles par des plaques de maintien métalliques soudées entre elles autour des cellules. Puis des connecteurs électriques sont installés entre les cellules.

Toutefois, afin de mettre en place les plaques latérales de maintien, un ensemble de cellules doit être immobilisé pour permettre le soudage des plaques de maintien. Ces opérations sont assez complexes et prennent un certain temps.

Un but de l'invention est donc de fournir un procédé d'assemblage facilitant ces opérations, donc moins coûteux, tout en assurant une bonne tenue mécanique des cellules dans le module, le module étant avantageusement étanche.

A cet effet, l'invention a pour objet un procédé d'assemblage d'un module pour batterie électrique comprenant les étapes suivantes :
- obtention d'un ensemble, l'ensemble comprenant, successivement selon un premier axe lié à l'ensemble, une première plaque de maintien, une pluralité de cellules électrochimiques, et une deuxième plaque de maintien,
- obtention d'un élément de boîtier, l'élément de boîtier formant une gaine s'étendant selon un deuxième axe lié à la gaine,
- obtention d'un dispositif de manutention comprenant un corps, et au moins deux mâchoires montées sur le corps mobiles l'une par rapport à l'autre selon un axe de compression entre une position de repos, dans laquelle une zone de réception est définie entre les deux mâchoires selon l'axe de compression, et une position de travail, dans laquelle les deux mâchoires sont plus proches l'une de l'autre que dans la position de repos, l'une des deux mâchoires et une portion du corps formant une partie allongée du dispositif de manutention s'étendant selon l'axe de compression d'un côté de la zone de réception,
- premier déplacement relatif de l'élément de boîtier par rapport au dispositif de manutention pour mettre l'élément de boîtier dans la zone de réception, et deuxième déplacement relatif de l'élément de boîtier par rapport au dispositif de manutention selon l'axe de compression, depuis la zone de réception vers une position intermédiaire, dans laquelle l'élément de boîtier entoure la partie allongée,
- premier déplacement relatif de l'ensemble par rapport au dispositif de manutention pour mettre l'ensemble dans la zone de réception, et déplacement des deux mâchoires de la position de repos à la position de travail, les deux mâchoires appliquant des efforts de compression selon le premier axe respectivement sur la première plaque de maintien et sur la deuxième plaque de maintien, l'ensemble étant dans une configuration contractée selon le premier axe et solidaire mécaniquement du dispositif de manutention,
- installation de connecteurs électriques entre au moins certaines des cellules,
- troisième déplacement relatif de l'élément de boîtier par rapport au dispositif de manutention selon le premier axe depuis la position intermédiaire vers une position enfilée, dans laquelle la gaine entoure l'ensemble,
- fixation de la première plaque de maintien et de la deuxième plaque de maintien respectivement sur l'élément de boîtier, l'ensemble étant dans la configuration contractée, et
- déplacement des deux mâchoires de la position de travail à la position de repos pour libérer l'ensemble et l'élément de boîtier du dispositif de manutention.

Selon des modes particuliers de réalisation, le procédé comprend l'une ou plusieurs des caractéristiques suivantes, prise(s) isolément ou selon toutes les combinaisons techniquement possibles :
- au moins dans la position de travail, les deux mâchoires sont mobiles en rotation par rapport au corps autour d'un axe de rotation lié au corps, l'étape de fixation comprenant une sous-étape de rotation de l'ensemble et de l'élément de boîtier par rapport au corps autour de l'axe de rotation ;
- l'axe de rotation et l'axe de compression forment un même axe ;
- l'étape de fixation comprend un soudage de la première plaque de maintien et de la deuxième plaque de maintien respectivement sur deux extrémités de la gaine opposées l'une à l'autre selon le deuxième axe ;
- le corps comprend une portion en forme de « U » ou en « V » en vue selon une direction horizontale perpendiculaire à l'axe de compression, l'une des deux mâchoires étant montée sur une des deux extrémités du « U » ou du « V », l'autre des deux mâchoires étant montée sur ladite portion formant la partie allongée, ladite portion étant fixée sur l'autre des deux extrémités du « U » ou du « V » ;
- le procédé met en oeuvre un dispositif de convoyage, l'ensemble étant placé sur le dispositif de convoyage dans une position d'obtention à l'issue de l'étape d'obtention de l'ensemble, l'élément de boîtier étant placé sur le dispositif de convoyage dans une position d'obtention à l'issue de l'étape d'obtention de l'élément de boîtier, le dispositif de convoyage étant configuré pour réaliser : le premier déplacement relatif de l'élément de boîtier de sa position d'obtention vers la zone de réception ; le premier déplacement relatif l'ensemble de sa position d'obtention vers la zone de réception ; et un enlèvement de l'ensemble et de l'élément de boîtier après les étapes de fixation et de déplacement des deux mâchoires de la position de travail à la position de repos ;
- le dispositif de convoyage comprend un carrousel définissant successivement une première zone pour recevoir l'élément de boîtier dans la position d'obtention de l'élément de boîtier, une deuxième zone pour recevoir l'ensemble dans position d'obtention de l'ensemble , une troisième zone destinée à se situer dans zone de réception pendant l'étape de fixation, et une quatrième zone destinée à recevoir l'ensemble et l'élément de boîtier après les étapes de fixation et de déplacement des deux mâchoires de la position de travail à la position de repos ;
- le carrousel est monté rotatif autour d'un axe de rotation, la première zone, la deuxième zone, la troisième zone et la quatrième zone étant successives autour de l'axe de rotation ;
- l'axe de rotation est vertical ;
- la première zone, la deuxième zone, la troisième zone et la quatrième zone s'étendent sur sensiblement 90° autour de l'axe de rotation ;
- le carrousel comprend un support formant un anneau interrompu autour de l'axe de rotation, le support s'étendant dans la première zone, la deuxième zone et la quatrième zone, la troisième zone étant dépourvue de support ; et
- le module est étanche.

L'invention sera mieux comprise à la lecture de la description qui va suivre, donnée uniquement à titre d'exemple et faite en se référant aux dessins annexés, sur lesquels :
- la figure 1 est une vue en perspective d'une installation pour mettre en oeuvre un procédé selon l'invention, l'élément de boîtier et l'ensemble étant sur un dispositif de convoyage, les deux mâchoires du dispositif de manutention étant dans la position de repos,
- la figure 2 est une vue en perspective de l'installation représentée sur la figure 1, le dispositif de convoyage ayant tourné d'un quart de tour par rapport à la figure 1, et l'élément de boîtier ayant subi le deuxième déplacement relatif et entourant la partie allongée du dispositif de manutention,
- la figure 3 est une vue en perspective du dispositif de manutention représenté sur les figures 1 et 2, le dispositif de convoyage ayant tourné d'un quart de tour par rapport à la figure 2, l'ensemble étant dans la zone de réception, les deux mâchoires étant dans la position de travail, et des connecteurs électriques ayant été ajoutés sur l'ensemble, et
- la figure 4 est une vue analogue à celle de la figure 3, l'élément de boîtier ayant subi le troisième déplacement relatif et entourant l'ensemble, la première plaque de maintien et la deuxième plaque de maintien étant prêtes à être soudées sur l'élément de boîtier.

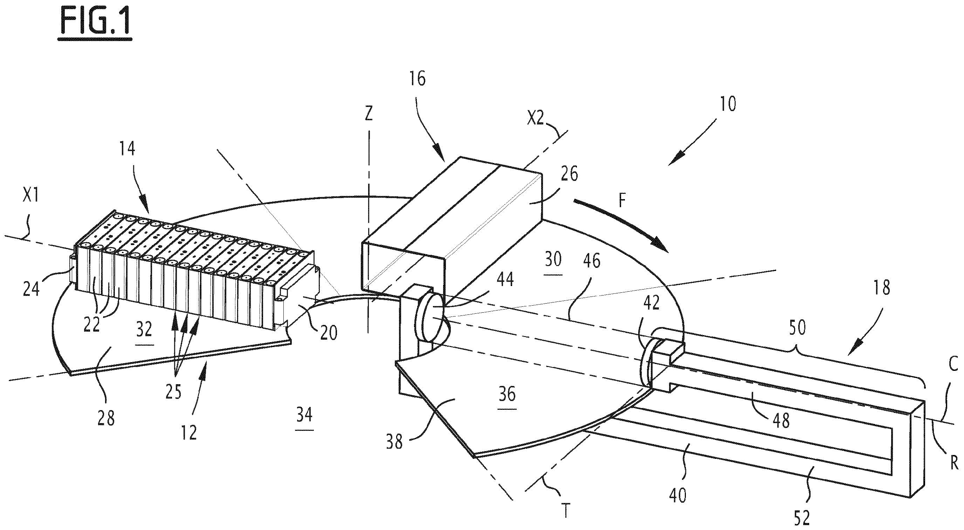

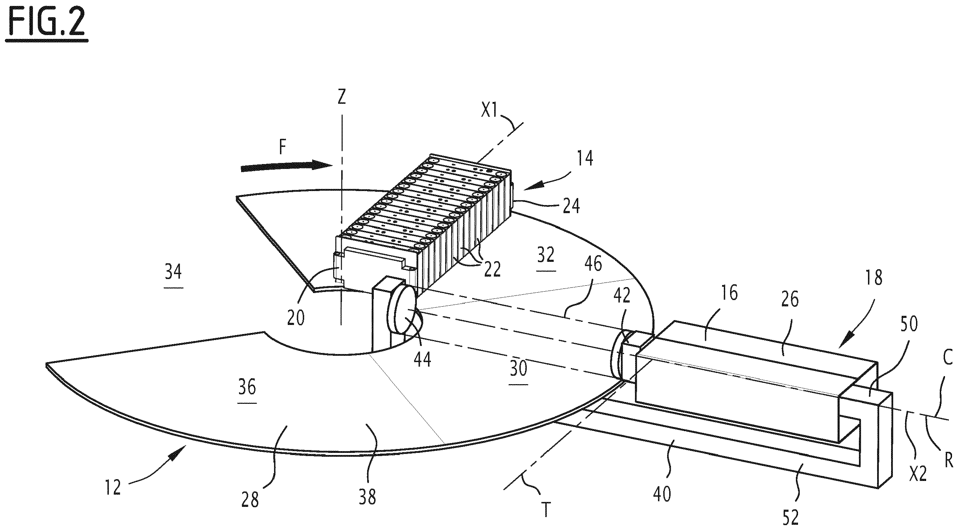

En référence aux figures 1 et 2, on décrit une installation 10 adaptée pour réaliser un procédé selon l'invention.

L'installation 10 comprend un dispositif de convoyage 12 adapté pour recevoir un ensemble 14 et un élément de boîtier 16. L'installation 10 comprend un dispositif de manutention 18.

L'ensemble 14 comprenant, successivement selon un premier axe X1 lié à l'ensemble, une première plaque de maintien 20, une pluralité de cellules 22 électrochimiques, et une deuxième plaque de maintien 24. L'ensemble 14 comprend éventuellement des séparateurs 25 entre les cellules 22. L'ensemble 14 a par exemple une forme de parallélépipède rectangle, chacune des cellules 22 ayant par exemple une forme de parallélépipède rectangle.

Les cellules 22 sont par exemple de forme prismatique, notamment parallélépipédique.

Les séparateurs 25 sont avantageusement intercalés entre les cellules 22. Les séparateurs 25 sont avantageusement adaptés, en cas de compression selon la direction L, pour créer un effort antagoniste à la compression.

L'élément de boîtier 16 forme une gaine 26 s'étendant selon un deuxième axe X2 lié à la gaine. La gaine 26 présente par exemple une forme rectangulaire en section perpendiculairement au deuxième axe X2. La gaine 26 peut être un tube.

Le dispositif de convoyage 12 comprend avantageusement un carrousel 28 définissant successivement une première zone 30 pour recevoir l'élément de boîtier 16 dans une position d'obtention de l'élément de boîtier, une deuxième zone 32 pour recevoir l'ensemble 14 dans une position d'obtention de l'ensemble, une troisième zone 34 dont le rôle sera précisé plus bas, et une quatrième zone 36 destinée à recevoir l'ensemble 14 et l'élément de boîtier 16 après leur assemblage.

Selon une variante non représentée, le dispositif de convoyage 12 est un convoyeur linéaire.

Le carrousel 28 est avantageusement monté rotatif autour d'un axe de rotation Z, la première zone 30, la deuxième zone 32, la troisième zone 34 et la quatrième zone 36 étant successives autour de l'axe de rotation Z.

L'axe de rotation Z est par exemple vertical.

Le carrousel 28 comprend avantageusement un support 38 formant un anneau interrompu autour de l'axe de rotation Z, le support s'étendant dans la première zone 30, la deuxième zone 32 et la quatrième zone 36, la troisième zone 34 étant par exemple dépourvue de support.

Le support 38 est par exemple orthogonal à l'axe de rotation Z.

La première zone 30, la deuxième zone 32, la troisième zone 34 et la quatrième zone 36 s'étendent par exemple sur sensiblement 90° autour de l'axe de rotation Z.

Le dispositif de manutention 18 comprend un corps 40, et au moins deux mâchoires 42, 44 montées sur le corps.

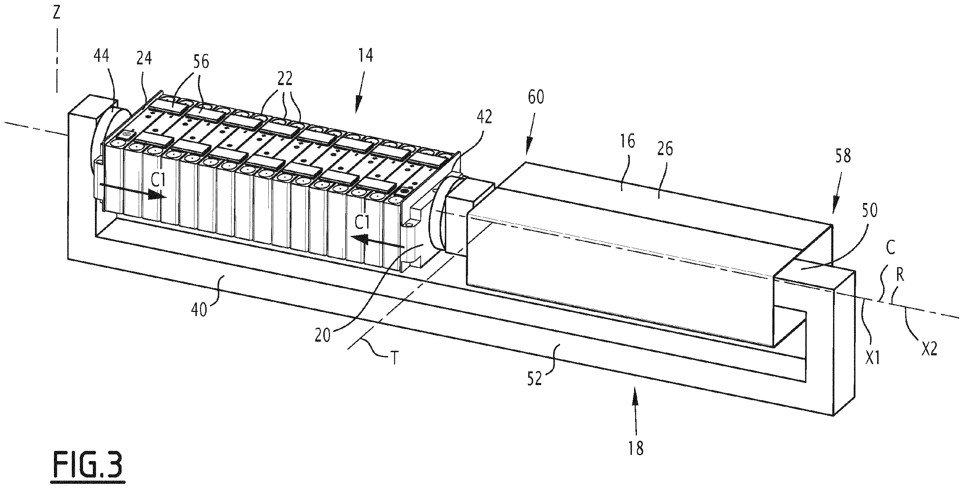

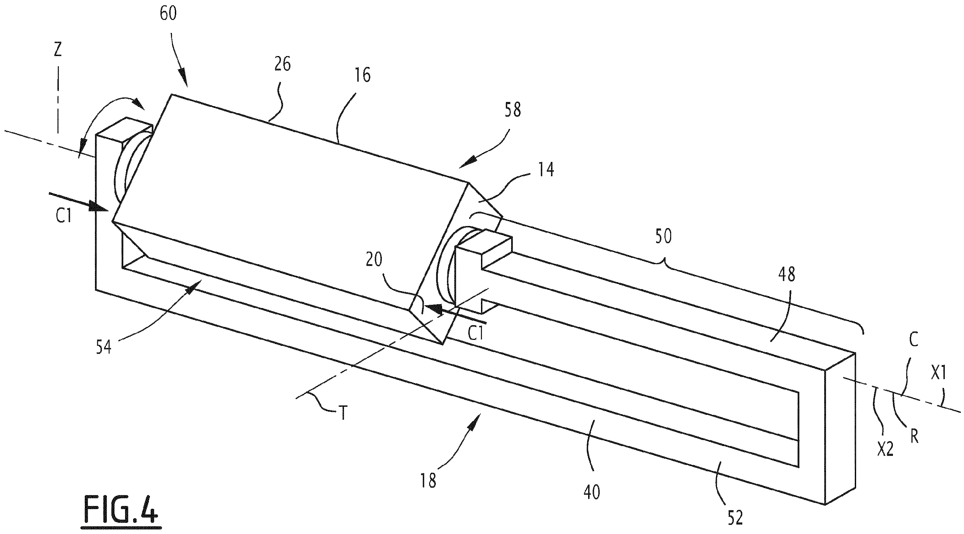

Les deux mâchoires 42, 44 sont mobiles l'une par rapport à l'autre selon un axe de compression C entre une position de repos (figure 1 et 2), dans laquelle une zone de réception 46 est définie entre les deux mâchoires 42, 44 selon l'axe de compression C, et une position de travail (figures 3 et 4), dans laquelle les deux mâchoires sont plus proches l'une de l'autre que dans la position de repos.

L'une des deux mâchoires 42, 44 et une portion 48 du corps forment une partie allongée 50 du dispositif de manutention 18 s'étendant selon l'axe de compression C d'un côté de la zone de réception 46.

Avantageusement, au moins dans la position de travail, les deux mâchoires 42, 44 sont mobiles en rotation par rapport au corps 40 autour d'un axe de rotation R lié au corps 40.

L'axe de rotation R et l'axe de compression C forment par exemple un même axe.

Le corps 40 comprend avantageusement une portion 52 en forme de « U » en vue selon une direction T horizontale perpendiculaire à l'axe de compression (C), l'une des deux mâchoires 42, 44 étant montée sur une des deux extrémités du « U », l'autre des deux mâchoires 42, 44 étant montée sur la portion 48. La portion 48 est par exemple fixée sur l'autre des deux extrémités du « U ».

Selon une variante non représentée, la portion 52 a par exemple une forme en « V ».

Par extrémité du « U » ou du « V », on entend une extrémité du trait formant ces lettres.

Un procédé selon l'invention va maintenant être décrit.

Dans l'exemple, le procédé est mis en oeuvre par l'installation 10.

Le procédé permet de produire un module 54 pour batterie électrique (figure 4). Le procédé comprend (figure 1) l'obtention de l'ensemble 14, l'obtention de l'élément de boîtier 16, et l'obtention du dispositif de manutention 18.

Le procédé comprend un premier déplacement relatif de l'élément de boîtier 16 par rapport au dispositif de manutention 18 pour mettre l'élément de boîtier dans la zone de réception 46. Le procédé comprend un deuxième déplacement relatif de l'élément de boîtier 16 par rapport au dispositif de manutention 18 selon l'axe de compression C, depuis la zone de réception 46 vers une position intermédiaire, dans laquelle l'élément de boîtier 16 entoure la partie allongée 50 (figure 2).

Le procédé comprend un premier déplacement relatif de l'ensemble 14 par rapport au dispositif de manutention 18 pour mettre l'ensemble 14 dans la zone de réception 46 (figure 3), et un déplacement des deux mâchoires 42, 44 de la position de repos à la position de travail. Les deux mâchoires 42, 44 appliquent des efforts de compression C1 selon le premier axe X1 respectivement sur la première plaque de maintien 20 et sur la deuxième plaque de maintien 24. L'ensemble 14 est dans une configuration contractée selon le premier axe X1 et est solidaire mécaniquement du dispositif de manutention 18.

Le procédé comprend installation de connecteurs électriques 56 (figure 3) entre au moins certaines des cellules 22.

Le procédé comprend un troisième déplacement relatif de l'élément de boîtier 16 par rapport au dispositif de manutention 18 selon le premier axe X1 depuis la position intermédiaire (figure 3) vers une position enfilée (figure 4), dans laquelle la gaine 26 entoure l'ensemble 14.

Le procédé comprend une fixation, par exemple par soudage, de la première plaque de maintien 20 et de la deuxième plaque de maintien 24 respectivement sur l'élément de boîtier 16, l'ensemble 14 étant dans la configuration contractée. Par exemple, la fixation a lieu sur deux extrémités 58, 60 de la gaine 26 opposées l'une à l'autre selon le deuxième axe X2. Avantageusement, les plaques de maintien 20 et 24 sont fixées sur l'élément de boîtier 16 de manière étanche, notamment à l'eau. Dit autrement, le module 54 est avantageusement étanche. Ceci permet de mettre en oeuvre un refroidissement des cellules 22 par immersion dans un fluide.

Le procédé comprend un déplacement des deux mâchoires 42, 44 de la position de travail à la position de repos pour libérer l'ensemble 14 et l'élément de boîtier 16 du dispositif de manutention.

A l'issue de son étape d'obtention, l'élément de boîtier 16 est placé sur le dispositif de convoyage 12 dans une position d'obtention, par exemple la première zone 30 du carrousel 28. Le deuxième axe X2 est par exemple perpendiculaire à l'axe de rotation Z.

A l'issue de son étape d'obtention, l'ensemble 14 est placé sur le dispositif de convoyage 12 dans une position d'obtention, par exemple la deuxième zone 32 du carrousel 28. Le premier axe X1 est par exemple perpendiculaire à l'axe de rotation Z.

Le dispositif de convoyage 12 réalise dans l'exemple le premier déplacement relatif de l'élément de boîtier 16 de sa position d'obtention vers la zone de réception 46, le premier déplacement relatif l'ensemble de sa position d'obtention vers la zone de réception, et emporte l'ensemble 14 et l'élément de boîtier 16 après les étapes de fixation et de déplacement des deux mâchoires 42, 44 de la position de travail à la position de repos.

Par exemple, la quatrième zone 38 définie par le dispositif de convoyage 12 est initialement (figure 1) juste sous la zone réception 46 du dispositif de manutention 18.

Le carrousel 28 est alors entraîné (par des moyens non représentés) d'un quart de tour autour de l'axe de rotation Z selon la flèche F. La première zone 30 vient sous la zone de réception 46 (figure 2). L'élément de boîtier 16 est alors dans la zone de réception 46. L'élément de boîtier 16 subit alors son deuxième déplacement relatif et arrive dans la position intermédiaire (figure 2).

Le carrousel 28 est alors entraîné à nouveau d'un quart de tour autour de l'axe de rotation Z selon la flèche F. La deuxième zone 32 vient sous la zone de réception 46. L'ensemble 14 est alors dans la zone de réception 46. Les deux mâchoires 42, 44 passent de la position de repos à la position de travail et appliquent les efforts de compression C1 sur l'ensemble 14 (figure 3).

L'ensemble 14 est alors solidaire mécaniquement du dispositif de manutention 18.

Les connecteurs électriques 56 sont installés.

Le carrousel 28 est alors entraîné à nouveau d'un quart de tour autour de l'axe de rotation Z selon la flèche F. La troisième zone 34 se retrouve sous la zone de réception 46. L'élément de boîtier 16 subit alors le troisième déplacement relatif et entoure l'ensemble 14. La première plaque de maintien 20 et la deuxième plaque de maintien 24 sont fixées sur l'élément de boîtier 16.

La troisième zone 34, dépourvue dans l'exemple de support 38, facilite le troisième déplacement relatif de l'élément de boîtier 16 et sa fixation sur la première plaque de maintien 20 et la deuxième plaque de maintien 24.

Après la fixation, la première plaque de maintien 20, la deuxième plaque de maintien 24 et l'élément de boîtier 16 forment avantageusement un boîtier complet, et avantageusement étanche, autour de l'ensemble 14. Le tout forme le module 54.

L'étape de fixation comprend avantageusement une sous-étape de rotation de l'ensemble 14 et de l'élément de boîtier 16 par rapport au corps 40 autour de l'axe de rotation R. Ceci facilite les opérations de soudage.

Le carrousel 28 est alors entraîné à nouveau d'un quart de tour autour de l'axe de rotation V selon la flèche. La quatrième zone 36 se retrouve sous la zone de réception 46. Ensuite, les deux mâchoires 42, 44 repassent de la position de travail à la position de repos, ce qui libère le module 54, qui est avantageusement reçu dans la quatrième zone 36. Le module 54 peut alors être enlevé et l'on se retrouve dans la situation initiale.

Entre-temps, un nouvel ensemble 14 et un nouvel élément de boîtier 16 peuvent être obtenus et placés sur le carrousel 28, et le procédé peut être itéré.

Grâce aux caractéristiques décrites ci-dessus, le procédé facilite les opérations d'assemblage. Il est donc moins coûteux, tout en assurant une bonne tenue mécanique des cellules 22 dans le module 54 obtenu.

## Revendications

1. Procédé d'assemblage d'un module (54) pour batterie électrique comprenant les étapes suivantes :
- obtention d'un ensemble (14), l'ensemble (14) comprenant, successivement selon un premier axe (X1) lié à l'ensemble, une première plaque de maintien (20), une pluralité de cellules (22) électrochimiques, et une deuxième plaque de maintien (24),
- obtention d'un élément de boîtier (16), l'élément de boîtier (16) formant une gaine (26) s'étendant selon un deuxième axe (X2) lié à la gaine (26),
- obtention d'un dispositif de manutention (18) comprenant un corps (40), et au moins deux mâchoires (42, 44) montées sur le corps (40) mobiles l'une par rapport à l'autre selon un axe de compression (C) entre une position de repos, dans laquelle une zone de réception (46) est définie entre les deux mâchoires (42, 44) selon l'axe de compression (C), et une position de travail, dans laquelle les deux mâchoires (42, 44) sont plus proches l'une de l'autre que dans la position de repos, l'une des deux mâchoires (42, 44) et une portion (48) du corps (40) formant une partie allongée (50) du dispositif de manutention (18) s'étendant selon l'axe de compression (C) d'un côté de la zone de réception (46),
- premier déplacement relatif de l'élément de boîtier (16) par rapport au dispositif de manutention (18) pour mettre l'élément de boîtier (16) dans la zone de réception (46), et deuxième déplacement relatif de l'élément de boîtier (16) par rapport au dispositif de manutention (18) selon l'axe de compression (C), depuis la zone de réception vers une position intermédiaire, dans laquelle l'élément de boîtier (16) entoure la partie allongée (50),
- premier déplacement relatif de l'ensemble (14) par rapport au dispositif de manutention (18) pour mettre l'ensemble (14) dans la zone de réception (46), et déplacement des deux mâchoires (42, 44) de la position de repos à la position de travail, les deux mâchoires (42, 44) appliquant des efforts de compression (C1) selon le premier axe (X1) respectivement sur la première plaque de maintien (20) et sur la deuxième plaque de maintien (24), l'ensemble (14) étant dans une configuration contractée selon le premier axe (X1) et solidaire mécaniquement du dispositif de manutention (18),
- installation de connecteurs électriques (56) entre au moins certaines des cellules (22),
- troisième déplacement relatif de l'élément de boîtier (16) par rapport au dispositif de manutention (18) selon le premier axe (X1) depuis la position intermédiaire vers une position enfilée, dans laquelle la gaine (26) entoure l'ensemble (14),
- fixation de la première plaque de maintien (20) et de la deuxième plaque de maintien (24) respectivement sur l'élément de boîtier (16), l'ensemble (14) étant dans la configuration contractée, et
- déplacement des deux mâchoires (42, 44) de la position de travail à la position de repos pour libérer l'ensemble (14) et l'élément de boîtier (16) du dispositif de manutention (18).

2. Procédé selon la revendication 1, dans lequel, au moins dans la position de travail, les deux mâchoires (42, 44) sont mobiles en rotation par rapport au corps (40) autour d'un axe de rotation (R) lié au corps (40), l'étape de fixation comprenant une sous-étape de rotation de l'ensemble (14) et de l'élément de boîtier (16) par rapport au corps (40) autour de l'axe de rotation (R).

3. Procédé selon la revendication 2, dans lequel, l'axe de rotation (R) et l'axe de compression (C) forment un même axe.

4. Procédé selon l'une quelconque des revendications 1 à 3, dans lequel l'étape de fixation comprend un soudage de la première plaque de maintien (20) et de la deuxième plaque de maintien (24) respectivement sur deux extrémités (58, 60) de la gaine (26) opposées l'une à l'autre selon le deuxième axe (X2).

5. Procédé selon l'une quelconque des revendication 1 à 4, dans lequel le corps (40) comprend une portion (52) en forme de « U » ou en « V » en vue selon une direction horizontale perpendiculaire à l'axe de compression (C), l'une des deux mâchoires (42, 44) étant montée sur une des deux extrémités du « U » ou du « V », l'autre des deux mâchoires (42, 44) étant montée sur ladite portion (48) formant la partie allongée (52), ladite portion (48) étant fixée sur l'autre des deux extrémités du « U » ou du « V ».

6. Procédé selon l'une quelconque des revendication 1 à 5, mettant en oeuvre un dispositif de convoyage (12), l'ensemble (14) étant placé sur le dispositif de convoyage (12) dans une position d'obtention à l'issue de l'étape d'obtention de l'ensemble (14), l'élément de boîtier (16) étant placé sur le dispositif de convoyage (12) dans une position d'obtention à l'issue de l'étape d'obtention de l'élément de boîtier (16), le dispositif de convoyage (12) étant configuré pour réaliser :
- le premier déplacement relatif de l'élément de boîtier (16) de sa position d'obtention vers la zone de réception,
- le premier déplacement relatif l'ensemble (14) de sa position d'obtention vers la zone de réception (46), et
- un enlèvement de l'ensemble (14) et de l'élément de boîtier (16) après les étapes de fixation et de déplacement des deux mâchoires (42, 44) de la position de travail à la position de repos.

7. Procédé selon la revendication 6, dans lequel le dispositif de convoyage (12) comprend un carrousel (28) définissant successivement une première zone (30) pour recevoir l'élément de boîtier (16) dans la position d'obtention de l'élément de boîtier (16), une deuxième zone (32) pour recevoir l'ensemble (14) dans position d'obtention de l'ensemble (14), une troisième zone (34) destinée à se situer dans zone de réception (46) pendant l'étape de fixation, et une quatrième zone (36) destinée à recevoir l'ensemble (14) et l'élément de boîtier (16) après les étapes de fixation et de déplacement des deux mâchoires (42, 44) de la position de travail à la position de repos.

8. Procédé selon la revendication 7, dans lequel le carrousel (28) est monté rotatif autour d'un axe de rotation (Z), la première zone (30), la deuxième zone (32), la troisième zone (34) et la quatrième zone (36) étant successives autour de l'axe de rotation (Z).

9. Procédé selon la revendication 8, dans lequel l'axe de rotation (Z) est vertical.

10. Procédé selon l'une quelconque des revendications 7 à 9, dans lequel la première zone (30), la deuxième zone (32), la troisième zone (34) et la quatrième zone (36) s'étendent sur sensiblement 90° autour de l'axe de rotation (Z).

11. Procédé selon l'une quelconque des revendications 7 à 10, dans lequel le carrousel (28) comprend un support (38) formant un anneau interrompu autour de l'axe de rotation (Z), le support (38) s'étendant dans la première zone (30), la deuxième zone (32) et la quatrième zone (36), la troisième zone (34) étant dépourvue de support.

12. Procédé selon l'une quelconque des revendications 1 à 11, dans lequel le module (14) est étanche.
